# EUROPÄISCHE PATENTSCHRIFT

(11) **EP 1 637 089 B1**
(45) Veröffentlichungstag und Bekanntmachung des Hinweises auf die Patenterteilung: **29.02.2012**
(21) Anmeldenummer: 05106798.1
(22) Anmeldetag: 25.07.2005
(51) Int. Cl.: A61C 13/00, A61C 13/08, A61C 13/10

(54) **Verfahren zur Bearbeitung eines digitalisierten Werkstücks, insbesondere von dreidimensionalen Modellen von herzustellenden Zahnersatzteilen und Vorrichtung**
Method for manipulating digitalised objects, especially 3-dimensional models for dental prosthesis, and apparatus
Procédé de manipulation d'objets digitalisés, en particulier de modèles 3-dimensionnels d'éléments de reconstruction de dents, et dispositif

(30) Priorität: 23.07.2004 DE 102004035970
(43) Veröffentlichungstag der Anmeldung: 22.03.2006
(73) Patentinhaber: Sirona Dental Systems GmbH, 64625 Bensheim (DE)
(72) Erfinder: Wedler, Volker, 69493, Hirschberg (DE); Orth, Ulrich, 64646 Heppenheim (DE)
(74) Vertreter: Sommer, Peter

(56) Entgegenhaltungen:
- WO-A-2004/078058
- US-A- 5 257 203
- US-A- 5 557 719
- US-B1- 6 174 168
- US-B1- 6 454 629

## Beschreibung

### Technisches Gebiet

Die Erfindung betrifft ein Verfahren zur Bearbeitung eines digitalisierten Werkstücks, insbesondere von dreidimensionalen Modellen von herzustellenden Zahnersatzteilen, durch Veränderung von Oberflächendaten des Werkstücks mittels eines auf einen lokalen Einflussbereich der Oberfläche einwirkenden Werkzeugs.

Eine Konstruktion unter Anwendung von CAD ist nicht an die Beschränkungen durch die physikalischen Eigenschaften von Materialien und Werkzeugen gebunden, die Funktionsweise des Werkzeugs kann sich vielmehr vollständig von diesen physikalischen Eigenschaften lösen und deren Nachteile überwinden. Dabei soll insbesondere die Bedienbarkeit verbessert werden.

Bestehende dentale CAD/CAM-Systeme stellen keine Freiform-Werkzeuge bereit, die über die in der Zahntechnik üblichen Techniken hinausgehen. Daher besteht bei diesen Freiform-Werkzeugen wie auch im Bereich der manuellen Bearbeitung gegenständlicher Modelle der Nachteil, dass Feinstrukturen der Oberfläche beim Auftrag von Wachs zugedeckt werden.

### Stand der Technik

In dentalen CAD/CAM-Systemen werden verschiedenartige Werkzeuge für die Gestaltung von Modellen für die Herstellung von Zahnersatzteilen eingesetzt. Mit diesen Werkzeugen kann das digitale Modell des Zahnersatzteils typischer Weise linien- oder punktbasiert verändert werden. Beispielsweise kann die Äquatorlinie verändert werden, das Modell kann insgesamt in seiner Größe angepasst werden oder verschoben werden, weiterhin können einzelne Höcker höher oder niedriger gemacht werden oder die Lage der Höckerspitze verschoben werden.

US-A-5 257 203 beschreibt ein Verfahren und eine Vorrichtung für die computerunterstützte Darstellung und Manipulation von Zahnmodellen. Dabei wird ein Punkt der dargestellten Zahnmodelloberfläche an eine neue Position verschoben. Die Deformation der Oberfläche nimmt dabei mit dem Abstand von dem ausgewählten Punkt ab und erreicht bei einem ausgewählten maximalen Radius Null.

In WO 2004/078058 A1, veröffentlicht aus 16.09.2004, wird eine Vorrichtung und ein Verfahren zur Auswahl eines Bereichs eines in einer 3D-Darstellung dargestellten dentalen Restaurationskörpers offenbart, wobei zumindest Teile der Bereichsgrenzen als dentalspezifische Linien ausgebildet sind. Als Konstruktionswerkzeug kann insbesondere eine Formänderung zur Anwendung kommen, die die Oberfläche von den Bereichsgrenzen ausgehend bis zum Punkt der stärksten Änderung verändert.

Darüber hinaus werden Werkzeuge eingesetzt, mit denen man die Form der Oberfläche frei verändern kann und die aus in der Zahntechnik üblichen Techniken abgeleitet sind, beispielsweise das Aufbringen von Wachstropfen oder das Entfernen von Material mit einem Messer, beide natürlich in digitaler Form umgesetzt.

Die linien- oder punktbasierten Werkzeuge sind in der Regel einfach zu bedienen, haben aber den Nachteil, dass der Benutzer die Flächen zwischen den Linien bzw. Punkten nicht oder nur unzureichend und indirekt beeinflussen kann.

Die aus der Zahntechnik abgeleiteten Werkzeuge orientieren sich typischer Weise an den Eigenschaften der mechanischen Werkzeuge wie zum Beispiel einem Messer oder an den Eigenschaften des Wachses, zum Beispiel der Tropfengröße oder der Temperatur.

Die Aufgabe der Erfindung besteht darin, dem Benutzer von CAD/CAM-Systemen ein Werkzeug anzubieten, welches ihm zusätzliche Möglichkeiten gibt, die Form des Modells zu gestalten.

### Offenbarung der Erfindung

Gegenstand der Erfindung ist ein Verfahren zur Bearbeitung eines digitalisierten Werkstücks, nämlich eines dreidimensionalen Modells eines herzustellenden Zahnersatzteils, durch Veränderung von Oberflächendaten des Werkstücks mittels eines auf einen lokalen Einflussbereich der Oberfläche einwirkenden Werkzeugs, wobei bei Anwendung des Werkzeugs auf die Oberfläche in dem Einflussbereich des Werkzeugs eine Höhenänderung der Oberfläche erfolgt. Der Einflussbereich des Werkzeugs weist einen Anderungsbereich mit einer über den Änderungsbereich im wesentlichen konstanten Höhenänderung sowie einen Übergangsbereich auf, in dem eine Anpassung der Oberfläche des Änderungsbereichs an die Oberfläche außerhalb des Einflussbereichs stattfindet, wobei mit dem Werkzeug die Oberfläche des Einflussbereichs in Richtung des Normalenvektors zu der Oberfläche verändert wird, wobei der Normalvektor durch Mittelung über einen Auswertebereich des Bearbeitungswerkzeugs bestimmt wird, wobei der Auswertebereich innerhalb des Einflussbereichs liegt und höchstens so groß wie der Einflussbereich ist.

Mit dem erfindungsgemäßen Werkzeug erhält der Benutzer die Möglichkeit, an einer beliebigen Stelle der Oberfläche des Modells eine dünne Materialschicht mit im wesentlichen konstanter Schichtdicke auf- oder abzutragen, was hier als Höhenänderung der Oberfläche bezeichnet ist. Die Größe des Bereichs ist dabei einstellbar. Durch eine Wiederholfunktion beim Bewegen des Werkzeugs über dieselbe Stelle der Oberfläche kann der Benutzer in einfacher Weise Zahnstrukturen aufbauen bzw. abtragen, ohne dabei die Feinstrukturen zuzudecken.

Mit dem Werkzeug wird die Oberfläche des Einflussbereichs in Richtung eines Normalenvektors zu der Oberfläche verändert.

Die Richtung der Änderung der Oberfläche im Einflussbereich kann insbesondere aus einem über einen Auswertebereich des Werkzeugs gemittelten Normalenvektor erfolgen. Der Auswertebereich kann sich über den Einflussbereich, den Änderungsbereich oder über den Auswahlbereich erstrecken oder ein Ausschnitt daraus sein.

Durch die Loslösung vom Vorbild des zahntechnischen Vorgehens entstehen neue Möglichkeiten der Gestaltung von dentalen Zahnersatzteilen. Der Benutzer kann die Formveränderung besser steuern als mit den bisher verfügbaren Werkzeugen und dabei eine vorhandene Feinstruktur beibehalten.

Die Position des Werkzeugs kann vorzugsweise durch einen Positionszeiger dargestellt werden, der über Steuermittel über die Darstellung der Oberfläche des Werkstücks bewegbar ist und einem Auswahlbereich auf der Oberfläche entspricht. Dabei kann der Auswahlbereich von dem Einflussbereich des Werkzeugs unabhängig sein.

Die Höhenänderung kann einem Auftrag oder einem Abtrag von Material entsprechen und die Auswahl der Richtung der Höhenänderung ist über ein Auswahlmittel ermöglicht.

Die Auswahl der Richtung der Höhenänderung kann durch unterschiedliche Darstellungen des Werkzeugs angezeigt sein. Der gerade aktivierte Modus des Werkzeugs ist dann für den Benutzer am Bildschirm sofort erkennbar.

Es kann vorteilhaft sein, wenn der mit dem Werkzeug bereits bearbeitete Bereich gegenüber der Darstellung der Oberfläche des Modells optisch unterscheidbar dargestellt ist. Damit weiß der Benutzer, welche Bereiche der Oberfläche bereits bearbeitet wurden. Mehrmals bearbeitete Bereiche können weiterhin anders dargestellt sein als einfach bearbeitete Bereiche, etwa durch eine Farbschattierung.

Vorteilhafterweise ist die Größe des Einflussbereichs veränderbar. Dafür sind Mittel zur Anzeige der Größe des Einflussbereichs vorgesehen. Die Größe des Einflussbereichs kann insbesondere durch eine farbige Markierung auf der Oberfläche des Modells angezeigt sein. Der Benutzer kann dann den Einflussbereich vergrößern oder verkleinern.

Vorzugsweise hängt der Betrag der Höhenänderung von der Erstreckung des Einflussbereichs ab. Insbesondere kann die

Höhenänderung mit zunehmender Erstreckung des Einflussbereichs abnehmen.

Ein weiterer Gegenstand der Erfindung ist eine Vorrichtung mit Mitteln zur Durchführung des Verfahrens.

### Kurze Beschreibung der Zeichnungen

Das erfindungsgemäße Verfahren wird anhand der Zeichnung erläutert. Es zeigen:
- Fig. 1: ein digitalisiertes Werkstück in Form eines drei- dimensionalen Modells eines Zahnersatzteils mit einem angezeigten Bereich der Bearbeitung, die
- Fig. 2: einen Schnitt durch das Werkstück aus Fig. 1 im Einflussbereich des Werkzeugs, die
- Fig. 3A: das digitale Modell des Zahnersatzteils aus Fig. 1 mit dem Einflussbereich 3 des Werkzeugs auf der Oberfläche 2, die
- Fig. 3B: eine Prinzipskizze des Einflussbereichs des Werk- zeugs sowie weiterer relevanter Bereiche, die
- Fig. 4A: einen Ausschnitt aus einer Werkstückoberfläche mit dem Einflussbereich des Werkzeugs, die
- Fig. 4B: einen Ausschnitt aus Fig. 4A, die
- Fig. 5: eine Vergrößerung des Einflussbereichs des Werkzeugs aus Fig. 4A zur Bestimmung der Richtung der Änderung, die
- Fig. 6A: eine Änderung einer ersten Oberfläche im Detail bei Anwendung des Werkzeugs, die
- Fig. 6B: eine Änderung einer zweiten Oberfläche im Detail bei Anwendung des Werkzeugs, die
- Fig. 7: den Verlauf der Änderung in einem Übergangsbereich im Detail, die
- Fig. 8A: einen ersten Verlauf einer Änderung bei einem Auswahlbereich mit sich verändernden Normalenvektoren, die
- Fig. 8B: einen zweiten Verlauf einer Änderung bei einem Auswahlbereich mit sich stark verändernden Normalenvektoren, die
- Fig. 9: einen schematischen Zusammenhang zwischen der Erstreckung des Einflussbereichs des Werkzeugs und der Höhenänderung.

### Ausführungsform der Erfindung

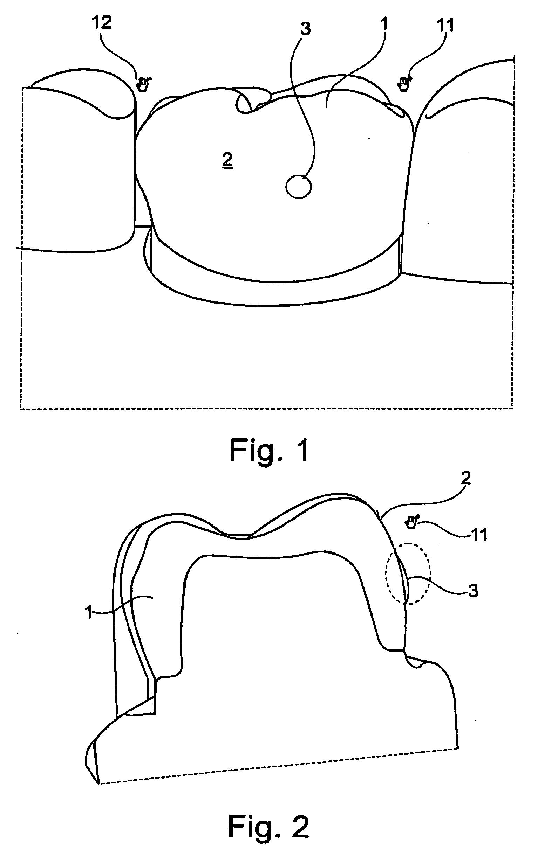

In Fig. 1 ist ein digitalisiertes Werkstück in Form eines dreidimensionalen Modells eines herzustellenden Zahnersatzteils 1 gezeigt, welches vom Benutzer verändert werden soll. Das Modell ist auf einem Bildschirm eines Computers dargestellt.

Bei der Bearbeitung wird die Oberfläche 2 des Modells des Zahnersatzteils, welche in Form digitaler Daten vorliegt, mittels eines die Konstruktion bzw. diese Daten beeinflussenden Werkzeugs verändert. Das Werkzeug wirkt auf einen lokalen Einflussbereich 3 der Oberfläche 2 ein. Der Einflussbereich 3 ist als Kreis gezeigt, kann jedoch auch andere geeignete Formen aufweisen.

Zur Bewegung des Einflussbereichs 3 des Werkzeugs über die Oberfläche 2 sind nicht dargestellte Eingabemittel vorgesehen, beispielsweise eine Computermaus oder ein digitaler

Zeichenstift, welche einen Positionszeiger 11, 12 steuern.

Dabei ist zunächst das Werkzeug frei über die Darstellung verschiebbar und wird erst bei Bedarf aktiviert. Dies geschieht beispielsweise durch einen Mausklick an einer bestimmten Stelle oder durch Anklicken und Halten einer Maustaste bei gleichzeitiger Bewegung in Form von Wischbewegungen von einem Ausgangspunkt aus.

Die Auswahl der Richtung der Höhenänderung ist durch unterschiedliche Darstellungen des Positionsanzeigers 11, 12 des Werkzeugs angezeigt, hier beim Positionsanzeiger 11 als

Hand mit einem Plus zum Materialauftrag und beim Positionsanzeiger 12 als Hand mit einem Minus zum Materialabtrag.

Der gerade aktivierte Modus des Werkzeugs ist für den Benutzer am Bildschirm anhand des jeweils dargestellten Positionszeigers 11, 12 sofort erkennbar. Anders als dargestellt wird dem Benutzer nur einer der beiden Positionsanzeiger 11, 12 gezeigt.

Die Auswahl der Richtung der Höhenänderung ist über ein Auswahlmittel möglich. Die Umschaltung zwischen einem Auftrag und einem Abtrag von Material in Form einer Höhenänderung der Oberfläche kann beispielsweise durch das Drücken der Leertaste einer Computertastatur erfolgen.

In Fig. 2 ist das Zahnersatzteil 1 in einem transversalen Schnitt dargestellt, wobei der Schnitt durch den Einflussbereich 3 aus Fig. 1 gelegt ist. Zu erkennen ist der Verlauf der Oberfläche 2, der aus den Oberflächendaten erzeugt und zur Anzeige gebracht ist, sowie die erfolgte Änderung der Oberfläche innerhalb des Einflussbereichs 3 mittels des durch den Positionszeiger 11 dargestellten Werkzeugs im

Auftragmodus.

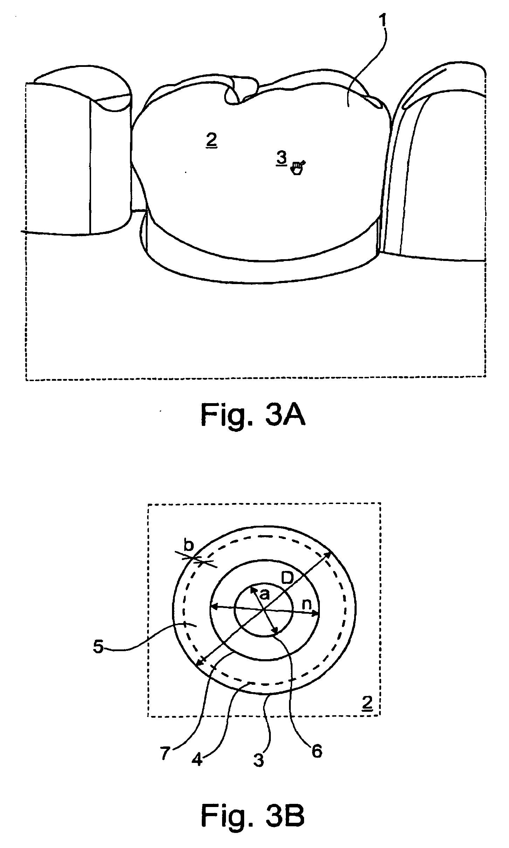

In Fig. 3A ist das digitale Modell des Zahnersatzteils aus Fig. 1 mit dem Einflussbereich 3 des Werkzeugs auf der Oberfläche 2 um den Positionszeiger 11 herum dargestellt, wobei die Erstreckung des Einflussbereichs 3 durch eine Markierung auf der Oberfläche 2 des Modells 1 angezeigt ist, hier durch Darstellung in einer anderen Farbe. Auch die Darstellung durch eine Textur mit einer Struktur, etwa einer Schraffur, ist möglich. Der Benutzer kann den Einflussbereich 3 vergrößern oder verkleinern. Dafür sind Mittel zur Änderung der Größe des Einflussbereichs vorgesehen.

In Fig. 3B ist eine Prinzipskizze mit dem Einflussbereich 3 des Werkzeugs sowie weiterer relevanter Bereiche auf einem Ausschnitt auf der Oberfläche 2 dargestellt. Der Einflussbereich 3 ist als Kreis gezeigt, kann jedoch auch andere geeignete Formen aufweisen. Prinzipiell sind alle glatt berandeten Flächen möglich, wobei jedoch elliptischen Formen der Vorzug zu geben ist, da keine Ecken entstehen.

Der Einflussbereich 3 weist eine Erstreckung D auf und außerhalb des Einflussbereichs 3 findet keine Veränderung der Oberfläche 2 statt.

Innerhalb des Einflussbereichs 3 ist ein Übergangsbereich 4 mit einer Breite b vorgesehen, der im vorliegenden Fall konzentrisch zum Einflussbereich 3 um einen Mittelpunkt M angeordnet ist.

Der Übergangsbereich 4 geht über in einen Änderungsbereich 5 mit im wesentlichen konstanter Höhenänderung.

Die Position des Werkzeugs wird durch einen Positionsanzeiger dargestellt, entsprechend Fig. 3A, dem ein Auswahlbereich 6 auf der Oberfläche 2 zugeordnet ist. Dieser Auswahlbereich 6 mit einem Durchmesser a ist unabhängig von dem Einflussbereich 3 des Werkzeugs, liegt jedoch im Ausführungsbeispiel konzentrisch zu dem Einflussbereich 3.

Bei Strichstärken und Pinseln sowie Sprays als Werkzeuge der Bildbearbeitung ist es bekannt, dass der Durchmesser des Auswahlbereichs dem Durchmesser des Einflussbereichs entspricht, so dass beispielsweise die Strichstärke oder Pinselstärke oder die Stäke des Sprühstrahls zu einer Veränderung der Größe des Auswahlbereichs des Positionsanzeigers führt. Ein vergleichbare Voreinstellung kann daher dem Benutzer angeboten werden mit der Möglichkeit, diese abzuändern.

Um die mit dem Werkzeug bereits bearbeiteten Bereiche optisch in ihrer flächigen Erstreckung zu verdeutlichen, kann der Einflussbereich 3 mit seiner Erstreckung D farblich gegenüber der Oberfläche 2 abgesetzt sein, ohne dass die Höhenveränderung sofort angezeigt wird.

Es ist aber auch möglich, die Wirkung des Werkzeugs durch Umrechnung der bearbeiteten Bereiche und Darstellung des neuen, veränderten Modells anzuzeigen, da die Anzeige des Modells des Zahnersatzteils gemäß Fig. 1 bereits Reflexe und Schattierungen erhält und allein durch Veränderung der Reflexe bzw. Abschattungen als Folge der Anwendung des Werkzeugs sich Veränderungen feststellen lassen. Der Zwischenschritt über die zunächst flächige Darstellung ist dann entbehrlich.

Schließlich ist ein Auswertebereich 7 vorgesehen, der eine Erstreckung n aufweist und innerhalb dessen aus Normalenvektoren zur Oberfläche 2 innerhalb des Auswertebereichs ein Normalenvektor n₀ für die Bestimmung der Richtung der Höhenänderung gebildet wird, etwa durch Mittelung über den Auswertebereich. Auch der Auswertebereich 7 liegt im Ausführungsbeispiel konzentrisch zum Einflussbereich 3, ist in seiner Erstreckung n aber unabhängig von dem Einflussbereich 3 oder dem Auswahlbereich 6, so dass auch bei einem Positionsanzeiger mit kleinem Auswahlbereich 6 und einer Einstellung mit großem Einflussbereich 3 der Auswertebereich 7 unverändert ist. Selbstverständlich kann der Auswertebereich auch an die Größe des Einflussbereichs angepasst werden. Es hat sich als praktisch erwiesen, den Auswertebereich mindestens so groß wie den Auswahlbereich 6 und höchstens so groß wie den Einflussbereich 3 auszubilden.

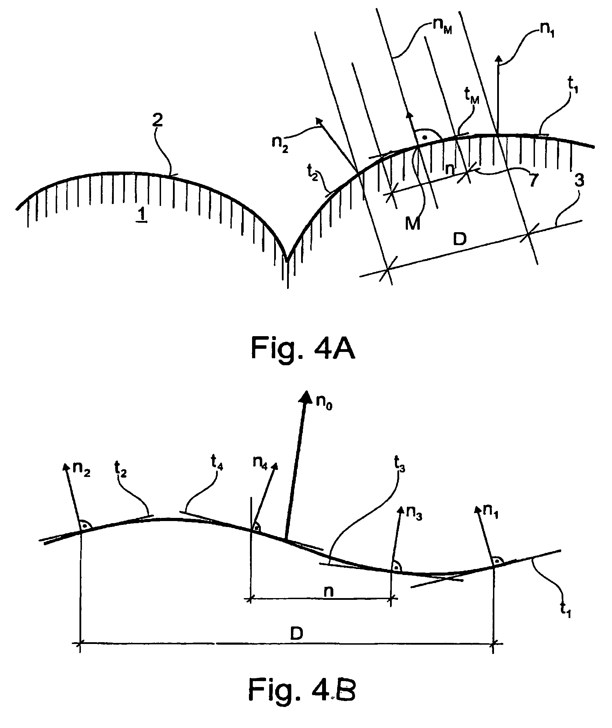

In Fig. 4A wird die in Fig. 3 erläuterte Aufteilung der Oberfläche 2 in unterschiedliche Bereiche in einer Schnittzeichnung gemäß Fig. 2 schematisch dargestellt.

Zu erkennen ist das Zahnersatzteil 1 mit seiner Oberfläche 2, auf der der Einflussbereich 3 durch gedachte Begrenzungslinien mit einem Abstand der Erstreckung D wiedergegeben ist. Die Grenzen des Erstreckungsbereichs 3 sind festgelegt durch den Abstand zu einem Mittelpunkt M der Teil der Oberfläche 2 ist. Im Mittelpunkt M wird der Normalenvektor n_{M} bestimmt, beispielsweise über die Bestimmung der

Tangente t_{M} an die Oberfläche 2 im Punkt M.

Der Betrag des Normalenvektors ist für das vorliegende Verfahren von untergeordneter Bedeutung, da die Höhenänderung unabhängig von der Krümmung der Oberfläche als Voreinstellung festlegbar ist und während der Bearbeitung unterschiedlicher Stellen an der Oberfläche 2 gleich bleibt. Auf diese Art wird eine für den Benutzer abschätzbare Höhenänderung bei Betätigung des Werkzeugs erzielt.

Dargestellt sind auch die Tangenten t₁, t₂ sowie deren Normalenvektoren n₁, n₂ am Rand des Einflussbereichs 3 des Werkzeugs. Damit wird verdeutlicht, dass der Normalenvektor über die Erstreckung D des Einflussbereichs im Falle einer gekrümmten Oberfläche 2 unterschiedliche Richtungen aufweist. Für die Festlegung der Richtung der Höhenänderung des Einflussbereichs 3, also des Normalenvektors n₀, wird jedoch lediglich der Auswertebereich 7 mit einer Erstreckung n verwendet, im Detail dargestellt in Fig. 4B mit den Tangenten t₃, t₄ sowie deren Normalenvektoren n₃, n₄ am Rand des Auswertebereichs mit der Erstreckung n.

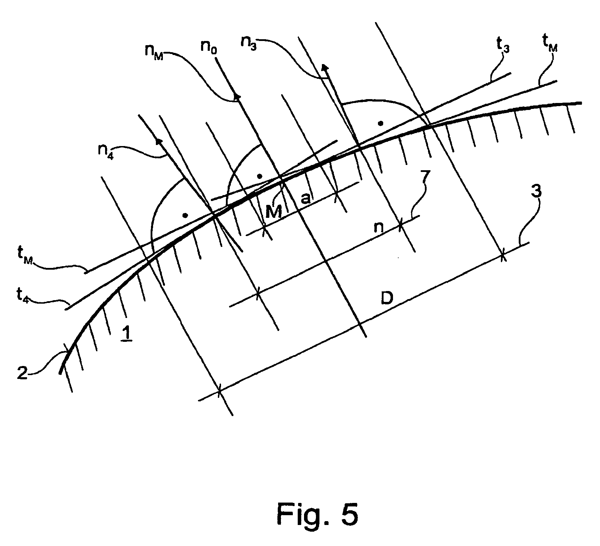

Dies ist in Fig. 5 weiter verdeutlicht. Zu erkennen ist hier wiederum der Einflussbereich 3 an der Oberfläche 2 des Zahnersatzteils 1 mit seiner Erstreckung D um den Mittelpunkt M. Über den Auswertebereich 7 mit seiner Erstreckung n findet eine Mittelung in der Richtung der Normalenvektoren n_{M}, n₃, n₄ statt, die anhand der Tangenten t_{M}, t₃, t₄ an die Oberfläche 2 ermittelt wurde. Der aus dieser Mittelung resultierende Normalenvektor n₀ fällt im Ausführungsbeispiel mit dem Normalenvektor n_{M} zusammen. Die Bestimmung eines Normalenvektors aus einem Auswahlbereich mit einer Erstreckung kleiner als der Erstreckung des Einflussbereichs bringt unmittelbar verständliche Vorteile bezüglich des Rechenaufwands. Ist eine ausreichende Rechenleistung vorhanden, so kann der Normalenvektor auch aus einem größeren Bereich ausgewertet werden.

Bei Oberflächen mit starken lokalen Krümmungen führt ein großer Bereich zu einer stärkeren Glättung des Normalenvektors und insgesamt zu einem stabileren Verfahren. Bei wenig gekrümmten Oberflächen führt die Glättung zu ähnlichen Richtungen des Normalenvektors, obwohl unterschiedliche Oberflächenbereiche mit unterschiedlichen Richtungen des Normalenvektors ausgewählt wurden, so dass die Richtung der Änderung weniger gut zu steuern ist, als bei einem kleinen Auswertebereich.

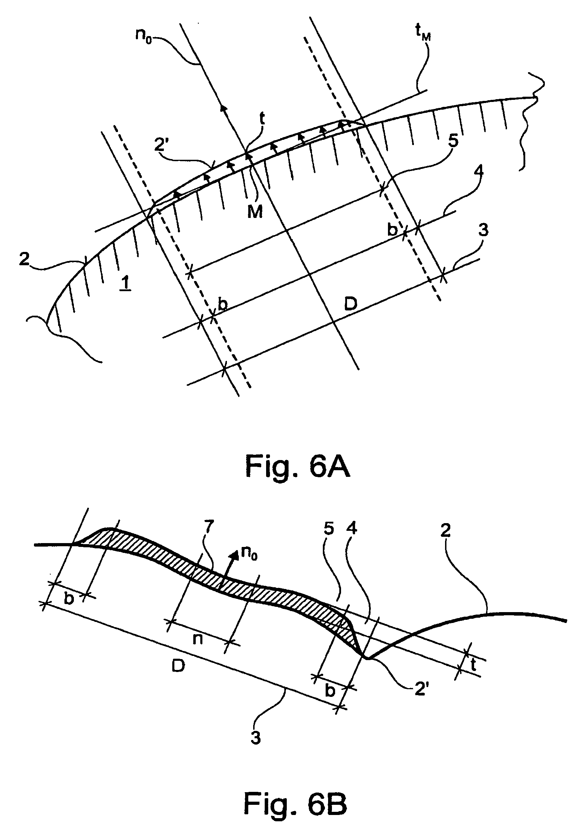

In Fig. 6A ist die Änderung der Oberfläche 2 bei Anwendung des Werkzeugs im Detail dargestellt. Innerhalb des Einflussbereichs 3 wird mit Ausnahme des Übergangsbereichs 4 mit einer Erstreckung b über den gesamten Änderungsbereich 5 hinweg in Richtung des Normalenvektors n₀ eine konstante Höhenänderung t der Oberfläche 2 des Zahnersatzteils 1 vorgenommen. Dies bedeutet, dass über den gesamten Änderungsbereich 5 hinweg an jeder Stelle der Oberfläche 2 in Richtung des Normalenvektors n₀ eine Schicht mit einer Schichtdicke t hinzugefügt wird.

In Fig. 6B ist die Änderung der Oberfläche 2 im Bereich einer außerhalb des Einflussbereichs 3 liegenden Fissur 2' dargestellt. Mit Ausnahme des Übergangsbereichs 4 mit einer Erstreckung b wird über den gesamten Änderungsbereich 5 hinweg in Richtung des Normalenvektors n₀ eine konstante Höhenänderung t der Oberfläche 2 vorgenommen. Dies bedeutet, dass über den gesamten Änderungsbereich 5 hinweg an jeder Stelle der Oberfläche 2 in Richtung des Normalenvektors n₀ eine Schicht mit einer Schichtdicke t hinzugefügt wird. Der Normalenvektor n₀ wird gebildet aus dem Auswertebereich 7 mit einer Erstreckung n.

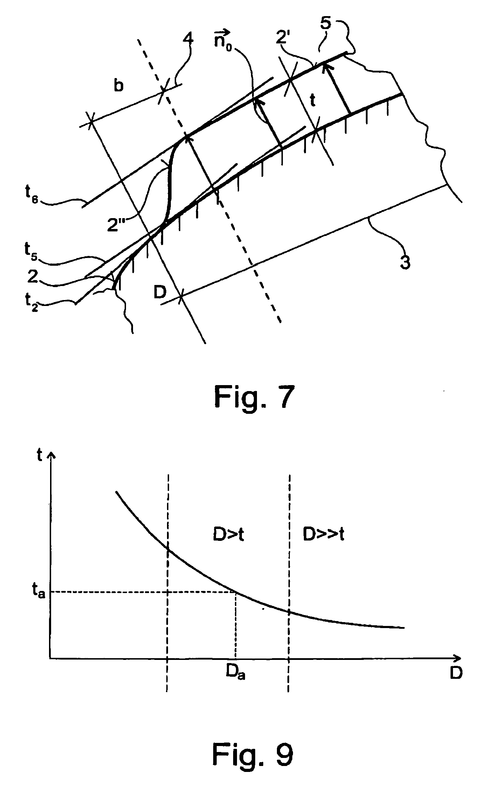

In Fig. 7 ist der Übergangsbereich 4 zwischen dem Änderungsbereich 5 und der unveränderten Oberfläche 2 dargestellt. Innerhalb des Übergangsbereichs 4 mit einer Erstreckung b wird die Oberfläche 2 so verändert, dass sie sich an beiden Rändern des Übergangsbereichs 4 an die jeweils benachbarten Bereiche anschmiegt. Dazu wird die Tangente t₂ an die Oberfläche 2 am Rand des Einflussbereichs 3 einerseits und die Tangente t₅ der Oberfläche 2 am Innenrand des Übergangsbereichs 4 ermittelt und der Verlauf der Oberfläche 2" wird festgelegt. Aufgrund der Randbedingung des tangentialen Anschmiegens weist die im Schnitt dargestellte Oberfläche 2" einen Wendepunkt auf. Der Übergangsbereich kann beispielsweise die Form einer Gauss-Kurve annehmen.

Der Vollständigkeit halber wird darauf hingewiesen, dass die Tangente t₅ in ihrer Richtung der Richtung der Tangente t₆ entspricht, welche am inneren Rand des Übergangsbereichs 4 durch Höhenänderung in Richtung des Normalenvektors n₀ um eine Schichtdicke t verschoben ist.

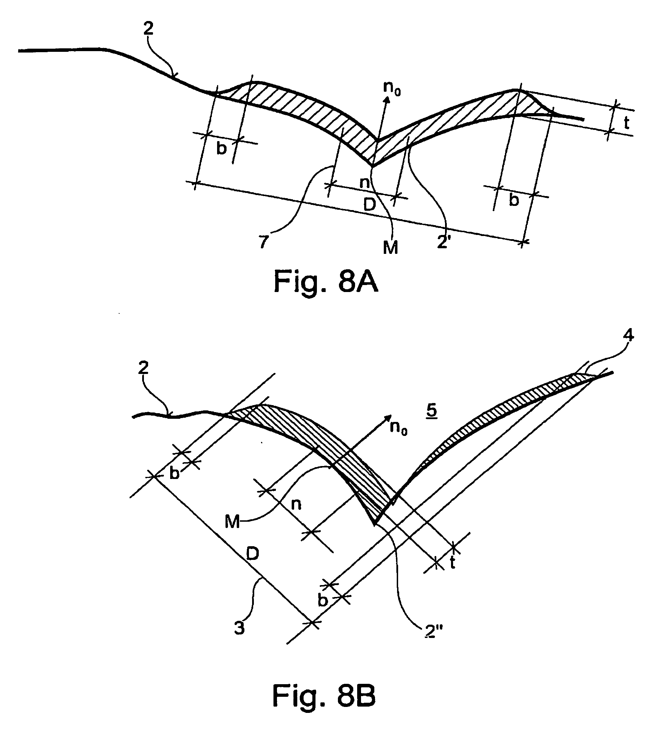

In Fig. 8A ist die Auswirkung des Werkzeugs bei einem Einflussbereich mit einem sich stark verändernden Normalenvektor dargestellt. Solche Änderungen kommen beispielsweise bei einer Fissur 2' eines Zahnersatzteils vor. Ausgehend vom Mittelpunkt M wird auch hier über den Einflussbereich 3 mit Ausnahme eines Übergangsbereichs 5 eine Änderung der Oberfläche 2 bewirkt, in dem in Richtung des Normalenvektors n₀ eine Höhenänderung konstanter Dicke t durchgeführt wird. Der Normalenvektor n₀ wurde über den Auswertebereich 7 bestimmt, wobei die Fissur 2' in dem Auswertebereich liegt.

In Fig. 8B ist die Auswirkung des Werkzeugs bei einem Einflussbereich mit einem sich stark verändernden Normalenvektor dargestellt, wobei der Auswertebereich ausserhalb der Fissur 2' liegt. Ausgehend vom Mittelpunkt M wird auch hier über den Einflussbereich 3 mit Ausnahme eines Übergangsbereichs 5 eine Änderung der Oberfläche 2 bewirkt, in dem in Richtung des Normalenvektors n₀ eine Höhenänderung konstanter Dicke t durchgeführt wird. Es sieht so aus, als ob der rechte Teil auf sich selbst abgebildet wird, tatsächlich erfolgt aber auch hier eine Verschiebung um die Dicke t bis zum Übergangsbereich hin. Dort findet eine Anpassung des Änderungsbereichs 5 an den Übergangsbereich 4 und an die

Oberfläche 2 außerhalb des Einflussbereichs 3 statt.

Aus den Fig. 8A, 8B ist zu erkennen, dass die Fissur 2' im wesentlichen erhalten bleibt. Dies ist ein entscheidender Vorteil dieses Werkzeugs gegenüber bekannten Freiform-Werkzeugen.

In Fig. 9 ein möglicher Zusammenhang zwischen der Erstreckung D des Einflussbereichs des Werkzeugs und der Höhenänderung t schematisch dargestellt, wobei stets gilt, dass die Erstreckung Dₐ des ausgewählten Einflussbereichs größer ist als die ausgewählte Dicke tₐ. In der Praxis hat sich gezeigt, dass die Erstreckung D des Einflussbereichs vorteilhafterweise sehr viel größer ist als die Dicke t. In Fig. 9 ist zudem zu erkennen, dass bei zunehmender Erstreckung D des Einflussbereichs der Betrag der Höhenänderung t abnimmt, so dass dann, wenn der Benutzer eine großen Einflussbereich auswählt, die Höhenänderung t geringer ausfällt als wenn der Benutzer einen Einflussbereich mit kleiner Erstreckung D auswählt. In der Praxis hat sich jedoch herausgestellt, dass die Erstreckung D des Einflussbereichs auf die Dicke t der Höhenänderung keinen Einfluss haben muss, dass also die Dicke t unabhängig von der Erstreckung D sein kann.

Das Ausführungsbeispiel wird mit den folgenden Zahlenwerten erläutert. Bei einer Höhenänderung um die Schichtdicke t von 10 x 10⁻⁶ m ergibt sich bei einem Verhältnis von 1:140 für den Einflussbereich eine Breite von 1.400 x 10⁻⁶ m. Der Übergangsbereich weist in diesem Fall bei einem Verhältnis zur Schichtdicke von 10:1 eine Breite von 100 x 10⁻⁶ m auf, wodurch ein hinreichend feiner Übergang sichergestellt ist.

Bei einer Vorrichtung zur Bearbeitung eines digitalisierten Werkstücks (1), insbesondere von dreidimensionalen Modellen von herzustellenden Zahnersatzteilen, durch Veränderung von Oberflächendaten des Werkstücks mittels eines auf einen lokalen Einflussbereich (3) der Oberfläche (2) einwirkenden Werkzeugs, sind Mittel vorgesehen, welche bei Anwendung des Werkzeugs auf die Oberfläche in dem Einflussbereich (3) des Werkzeugs Höhenänderung der Oberfläche (2) bewirken, wobei der Einflussbereich des Werkzeugs einen Änderungsbereich (5) mit einer über den Einflussbereich (3) im wesentlichen konstanten Höhenänderung (t) aufweist sowie einen Übergangsbereich (4), in dem eine Anpassung der Oberfläche des Änderungsbereichs (5) an die Oberfläche außerhalb des Einflussbereichs (3) stattfindet.

Diese Mittel umfassen Algorithmen zur Veränderung von Oberflächendaten und Mittel zur Erfassung der Auswahl des Bereichs der Oberfläche, der bearbeitet werden soll.

Diese Vorrichtung kann weitere Merkmale umfassen, die zur Durchführung des erfindungsgemäßen Verfahrens erforderlich und dort beschrieben sind.

## Patentansprüche

1. Verfahren zur Bearbeitung eines digitalisierten Werkstücks (1), nämlich eines dreidimensionalen Modells eines herzustellenden Zahnersatzteils, durch Veränderung von Oberflächendaten des Werkstücks (1) mittels eines auf einen lokalen Einflussbereich (3) der Oberfläche (2) einwirkenden Werkzeugs, wobei bei Anwendung des Werkzeugs auf die Oberfläche in dem Einflussbereich (3) des Werkzeugs eine Höhenänderung der Oberfläche (2) erfolgt, **dadurch gekennzeichnet, dass** der Einflussbereich (3) des Werkzeugs einen Änderungsbereich (5) mit einer über den Änderungsbereich (5) im wesentlichen konstanten Höhenänderung (t) aufweist sowie einen Übergangsbereich (4), in dem eine Anpassung der Oberfläche des Änderungsbereichs (5) an die Oberfläche außerhalb des Einflussbereichs (3) stattfindet, wobei mit dem Werkzeug die Oberfläche des Einflussbereichs (3) in Richtung des Normalenvektors (n₀) zu der Oberfläche (2) verändert wird, wobei der Normalvektor (n₀) durch Mittelung über einen Auswertebereich (7) des Bearbeitungswerkzeugs bestimmt wird, wobei der Auswertebereich (7) innerhalb des Einflussbereichs (3) liegt und höchstens so groß wie der Einflussbereich (3) ist.

2. Verfahren nach Anspruch 1, **dadurch gekennzeichnet, dass** die Größe des Einflussbereichs (3) veränderbar ist und dass vorzugsweise Mittel zur Anzeige der Größe des Einflussbereichs vorgesehen sind.

3. Verfahren nach Anspruch 1 oder 2, **dadurch gekennzeichnet, dass** der Betrag der Höhenänderung (t) von der Erstreckung (D) des Einflussbereichs (3) abhängt.

4. Verfahren nach Anspruch 3, **dadurch gekennzeichnet, dass** die Höhenänderung (t) mit zunehmender Erstreckung (D) des Einflussbereichs (3) abnimmt.

5. Verfahren nach einem der Ansprüche 1 bis 4, **dadurch gekennzeichnet, dass** die Position des Werkzeugs durch einen Positionszeiger dargestellt wird, der über Steuermittel über die Darstellung der Oberfläche des Werkstücks (1) bewegbar ist und dem Anwendungsbereich (5) auf der Oberfläche (2) entspricht, wobei die Höhenänderung (t) ein Auftragen oder ein Abtragen sein kann und dass die Auswahl der Richtung der Höhenänderung über ein Auswahlmittel ermöglicht und die Auswahl der Richtung der Höhenänderung durch unterschiedliche Darstellungen des Werkzeugs angezeigt ist und wobei der Einflussbereich (3) des Werkzeugs gegenüber der Darstellung der Oberfläche des (2) des Werkstücks (1) optisch unterscheidbar dargestellt ist.

6. Verfahren nach Ansprüche 1 bis 5, **dadurch gekennzeichnet, dass** der Auswertebereich (7) des Bearbeitungswerkzeugs sich über den Einflussbereich (3) den Änderungsbereich (5) oder über einen Ausschnitt daraus erstreckt.

7. Vorrichtung zur Bearbeitung eines digitalisierten Werkstücks (1), nämlich eines dreidimensionalen Modells eines herzustellenden Zahnersatzteils, durch Veränderung von Oberflächendaten des Werkstücks mittels eines auf einen lokalen Einflussbereich (3) der Oberfläche (2) einwirkenden Werkzeugs, wobei Mittel vorgesehen sind, welche bei Anwendung des Werkzeugs auf die Oberfläche in dem Einflussbereich (3) des Werkzeugs eine Höhenänderung der Oberfläche (2) bewirken, **dadurch gekennzeichnet, dass** der Einflussbereich (3) des Werkzeugs einen Änderungsbereich (5) mit einer über den Änderungsbereich (5) im wesentlichen konstanten Höhenänderung (t) aufweist sowie einen Übergangsbereich (4), in dem eine Anpassung der Oberfläche des Anderungsbereichs (5) an die Oberfläche außerhalb des Einflussbereichs (3) stattfindet, wobei mit dem Werkzeug die Oberfläche des Einflussbereichs (3) in Richtung des Normalenvektors (n₀) zu der Oberfläche (2) verändert wird, wobei der Normalvektor (n₀) durch Mittelung über einen Auswertebereich (7) des Bearbeitungswerkzeugs bestimmt wird, wobei der Auswertebereich (7) innerhalb des Einflussbereichs (3) liegt und höchstens so groß wie der Einflussbereich (3) ist.

## Claims

1. A method of processing a digitized workpiece (1), namely a three-dimensional model of a dental prosthetic item to be produced therefrom, by altering the surface data of the workpiece (1) using a tool which acts on a local zone of action (3) on the surface (2), a change in height of said surface (2) being effected in said zone of action (3) of said tool when the tool is applied to said surface, **characterized in that** the said zone of action (3) of said tool covering a modified region (5) showing a substantially constant change in height (t) over the modified region (5) and also a transition region (4), in which the surface of the modified region (5) merges into the surface surrounding said zone of action (3), wherein the use of said tool changes the surface of said zone of action (3) in the direction of a vector (n₀) normal to the surface (2), the normal vector (n₀) being determined by averaging over the evaluation range (7) of the processing tool, the evaluation range (7) forming part of the zone of action (3) and not exceeding the scope of the zone of action (3).

2. A method as defined in claim 1, **characterized in that** the size of said zone of action (3) is modifiable and that preferably means for indicating the size of said zone of action are provided.

3. A method as defined in any one of claims 1 or 2, **characterized in that** the amount of change in height (t) is dependent on the extent (D) of said zone of action (3).

4. A method as defined in claim 3, **characterized in that** the change in height (t) diminishes with increasing extent (D) of the zone of action (3).

5. A method as defined in any one of claims 1 to 4, **characterized in that** the position of the tool is indicated by a cursor which can be moved by control means over the display of the surface of the workpiece (1) and corresponds to the modified region (5) on said surface (2) said change in height (t) entailing addition or removal of material and that choosing the direction of said change in height is made possible by a selection means and the selection of the direction of said change in height being indicated by different representations of the tool and said zone of action (3) of the tool is visibly distinguishable from the representation of the surface (2) of the workpiece.

6. A method as defined in any one of claims 1 to 5, **characterized in that** the evaluation range (7) of the tool extends to the zone of action (3), the modified region (5) or to a section thereof.

7. An apparatus for processing a digitized workpiece (1), especially a three-dimensional model of dental prosthetic item to be produced therefrom, by altering the surface data of the workpiece by means of a tool which acts on a local zone of action (3) on the surface (2), means being provided which, when the tool is applied to the surface in a zone of action (3) of said tool, bring about a change in height of said surface (2), **characterized in that** the zone of action (3) of the tool includes a modified region (5) showing a change in height that is substantially constant over said modified region (5) and a transition region (4) in which the surface of the modified region (5) merges into the surface surrounding said zone of action (3), wherein the use of said tool changes the surface of said zone of action (3) in the direction of a vector (n₀) normal to the surface (2), the normal vector (n₀) being determined by averaging over the evaluation range (7) of the processing tool, the evaluation range (7) forming part of the zone of action (3) and not exceeding the scope of the zone of action (3).

## Revendications

1. Procédé de traitement d'une pièce à travailler (1) numérisée, notamment d'un modèle en trois dimensions d'une pièce de prothèse dentaire à fabriquer, par la modification de données de surface de la pièce à travailler (1) au moyen d'un outil agissant sur une zone d'influence locale (3) de la surface (2), dans lequel, lors de l'application de l'outil à la surface dans la zone d'influence (3) de l'outil, un changement de hauteur de la surface (2) est effectuée, **caractérisé en ce que** la zone d'influence (3) de l'outil présente une zone de changement (5) avec un changement de hauteur (t) substantiellement constant à travers la zone de changement (5), ainsi qu'une zone de transition (4) dans laquelle une adaptation de la surface de la zone de changement (5) à la surface a lieu en dehors de la zone d'influence (3), dans lequel l'outil permet de modifier la surface de la zone d'influence (3) en direction du vecteur de normale (n₀) à la surface (2), dans lequel le vecteur de normale (n₀) est déterminé par un calcul de moyenne sur une zone d'évaluation (7) de l'outil de traitement, dans lequel la zone d'évaluation (7) se trouve à l'intérieur de la zone d'influence (3) et est tout au plus aussi grande que la zone d'influence (3).

2. Procédé selon la revendication 1, **caractérisé en ce que** la dimension de la zone d'influence (3) est variable et **en ce que** de préférence des moyens pour afficher la dimension de la zone d'influence sont prévus.

3. Procédé selon la revendication 1 ou 2, **caractérisé en ce que** le degré du changement de hauteur (t) dépend de l'étendue (D) de la zone d'influence (3).

4. Procédé selon la revendication 3, **caractérisé en ce que** le changement de hauteur (t) diminue au fur et à mesure qu'augmente l'étendue (D) de la zone d'influence (3) .

5. Procédé selon l'une quelconque des revendications 1 à 4, **caractérisé en ce que** la position de l'outil est représentée par un curseur que l'on peut déplacer par des moyens de commande sur la représentation de la surface de la pièce à travailler (1) et qui correspond à la zone d'application (5) sur la surface (2), dans lequel lechangement de hauteur (t) peut être un apport ou un enlèvement et qui permet de sélectionner le sens du changement de hauteur par l'intermédiaire d'un moyen de sélection, et **en ce que** la sélection du sens du changement de hauteur est affiché par différentes représentations de l'outil, et dans lequel la zone d'influence (3) de l'outil est représentée par rapport à la représentation de la surface (2) de l'outil (1) de manière optiquement identifiable.

6. Procédé selon les revendications 1 à 5, **caractérisé en ce que** la zone d'évaluation (7) de l'outil de traitement s'étend sur la zone d'influence (3), la zone de changement (5) ou sur un secteur de celle-ci.

7. Dispositif de traitement d'une pièce à travailler (1) numérisée, notamment d'un modèle en trois dimensions d'une pièce de prothèse dentaire à fabriquer, par la modification de données de surface de la pièce à travailler (1) au moyen d'un outil agissant sur une zone d'influence locale (3) de la surface (2), dans lequel des moyens sont prévus qui, lorsque l'outil est appliqué à la surface dans la zone d'influence (3) de l'outil, provoquent un changement de hauteur de la surface (2), **caractérisé en ce que** la zone d'influence (3) de l'outil présente une zone de changement (5) avec un changement de hauteur (t) substantiellement constant à travers la zone de changement (5), ainsi qu'une zone de transition (4) dans laquelle une adaptation de la surface de la zone de changement (5) à la surface a lieu en dehors de la zone d'influence (3), dans lequel l'outil permet de modifier la surface de la zone d'influence (3) en direction du vecteur de normale (n₀) à la surface (2), dans lequel le vecteur de normale (n₀) est déterminé par un calcul de moyenne sur une zone d'évaluation (7) de l'outil de traitement, dans lequel la zone d'évaluation (7) se trouve à l'intérieur de la zone d'influence (3) et est tout au plus aussi grande que la zone d'influence (3).
